# EUROPEAN PATENT SPECIFICATION

(11) **EP 3 563 692 B1**
(45) Date of publication and mention of the grant of the patent: **02.06.2021**
(21) Application number: 19171896.4
(22) Date of filing: 30.04.2019
(51) Int. Cl.: A23G 9/26

(54) **GRIPPER FOR ICE CREAM STICKS**
GREIFER FÜR SPEISEEIS
PINCE POUR CRÈME GLACÉE

(30) Priority: 03.05.2018 EP 18170590
(43) Date of publication of application: 06.11.2019
(73) Proprietor: Tetra Laval Holdings & Finance S.A., 1009 Pully (CH)
(72) Inventor: Bonde, Tommy, DK-8600 Silkeborg (DK)
(74) Representative: Tetra Pak - Patent Attorneys SE

(56) References cited:
- EP-A1- 0 506 987
- EP-A2- 0 039 512
- WO-A1-97/46113
- WO-A1-99/56560
- DE-A1- 2 052 616
- JP-A- 2017 099 374
- US-A- 3 744 948
- US-A- 5 620 721

## Description

### Technical Field

The invention relates to a gripper for ice cream formed on a stick, and to a method of gripping an ice cream stick.

### Background

Various grippers are used for holding food products such as ice cream lollies during the different steps of their manufacturing process. For example, once ice cream has been formed around a stick in a molding process, the stick is typically engaged by a gripper which extracts the ice cream from the mold and re-positions the ice cream for the next process in the manufacturing line. The grippers and the components thereof are subjected to repeated forces during this handling process. A problem with previous grippers is that high mechanical stresses on the components may lead to compromised mechanical integrity of the grippers, which is of particular concern in the food handling industry due to the high hygienic standards where contamination must be avoided. A further problem with previous grippers is thus a continuous need of maintenance to monitor the function of the grippers and replace defect units. This reduces the throughput in the production line and puts a high demand on maintenance resources.

Related prior art is described in patent documents WO97/46113A1, JP2017099374A, US5620721A, WO99/56560A1 and DE2052616A1.

### Summary

It is an object of the invention to at least partly overcome one or more limitations of the prior art. In particular, it is an object to provide an improved gripper for ice cream lollies, in particular allowing for a high hygienic standard in the manufacturing process of the ice cream while requiring less maintenance.

In a first aspect of the invention, this is achieved by a gripper for a stick on which ice cream is formed, comprising a support and a lever being movable relative the support by a pivoting motion. The lever comprises a protrusion, wherein the lever is movable between a closed position in which the protrusion and the support pinch the stick, when the stick is arranged in a gap between the protrusion and the support, and an open position in which the gap is increased such that the stick is released from the gap, wherein the lever at least partly encloses the protrusion. The lever is formed from a material comprising a polymer, and the protrusion is formed from a material comprising a metal or a ceramic material

In another aspect of the invention, this is achieved by a method of gripping an ice cream stick by using a gripper according to the first aspect, comprising inserting the stick in a gap between a support and a protrusion of a movable lever of the gripper, pulling, when the lever is in a closed position, the ice cream stick and hence the ice cream from a mold while being secured in the gap, releasing the ice cream stick from the gap by moving the lever to an open position.

The protrusion is used for retaining the stick and may be referred to as a "retaining element".

Having a lever that at least partly encloses the retaining element provides for dispersing the pressure exerted on the retaining element during use so that stress in the material is reduced, thus providing for a secure attachment of the retaining element to the lever with a minimized risk rupture and contamination.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1a is a cross-sectional side view of a gripper and an ice cream stick anchored in the gripper;
Fig. 1b is a detailed cross-sectional side view of a gripper and an ice cream stick anchored in the gripper;
Figs. 1c-e are further detailed cross-sectional views of a gripper, in which an ice cream stick is anchored in the gripper when a lever thereof is in a closed position (1c); the lever is rotated to an open position (1d); and the lever is rotated to a fully closed position when the stick has been removed (1e);
Fig. 2 is a front view of a gripper and an ice cream stick anchored in the gripper;
Fig. 3 is a perspective view of a gripper and an ice cream stick anchored in the gripper;
Fig. 4a is a side view of a lever of the gripper;
Fig. 4b is a top-down view of the lever in Fig. 4a;
Fig. 4c is a cross-sectional view of a pivot joint of the lever;
Figs. 5a-b are cross-sectional views of the lever through section lines Z and Y in Fig. 4b, respectively;
Fig. 5c is a perspective view of the lever in Fig. 4a;
Fig. 6a is a cross-sectional side view of a protrusion (retaining element) of the lever;
Fig. 6b is a perspective view of a protrusion (retaining element) of the lever;
Fig. 7 is a perspective view of a plurality of grippers arranged to hold a respective ice cream stick; and
Fig. 8 is a flowchart of a method of gripping an ice cream stick by using a gripper.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

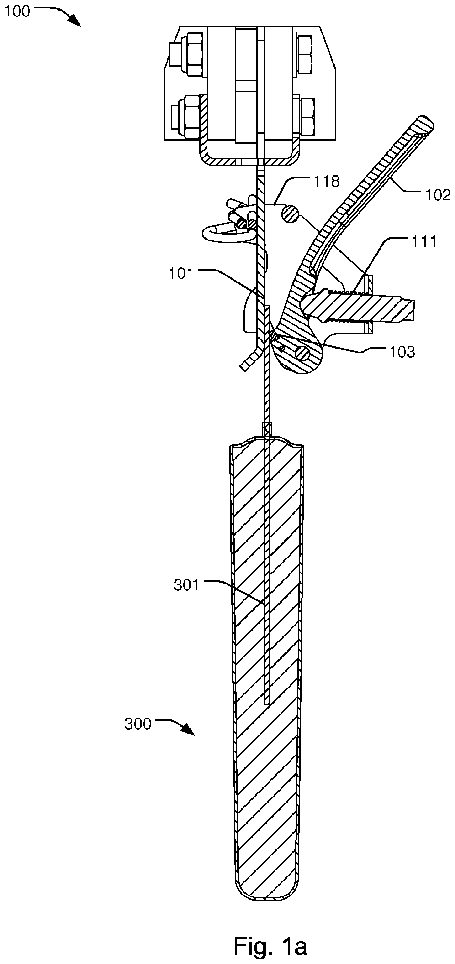

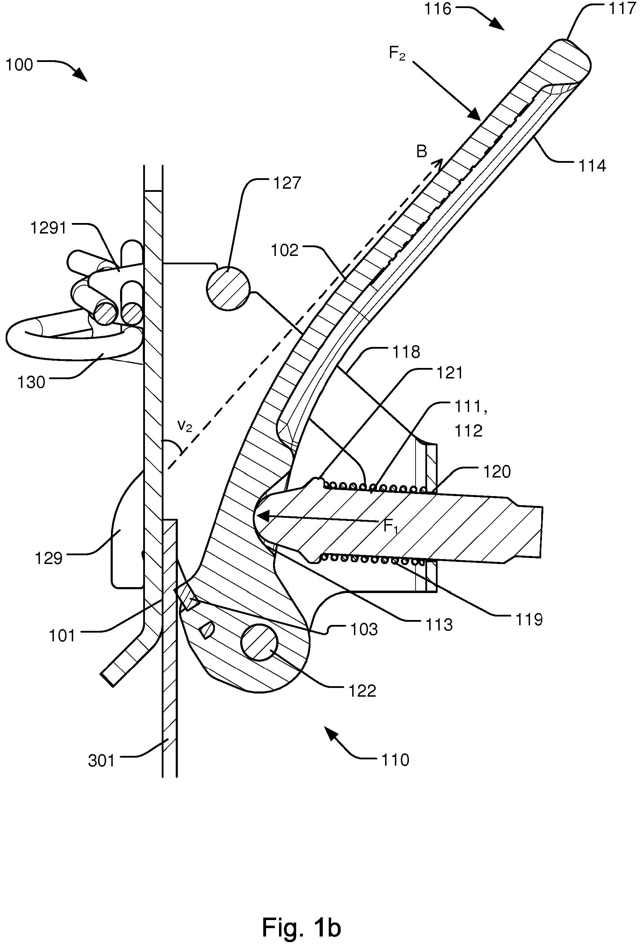

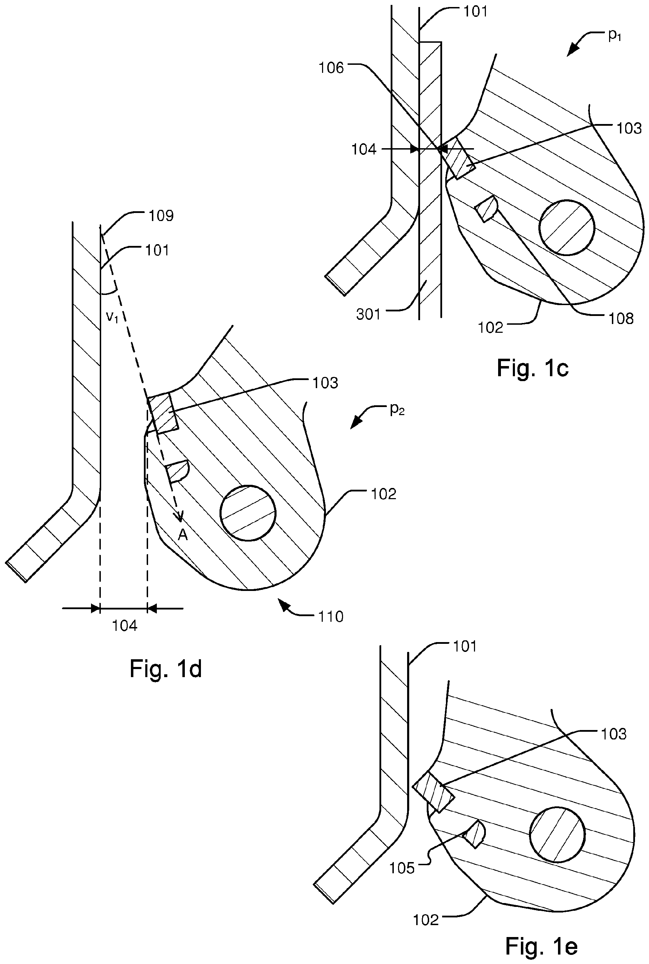

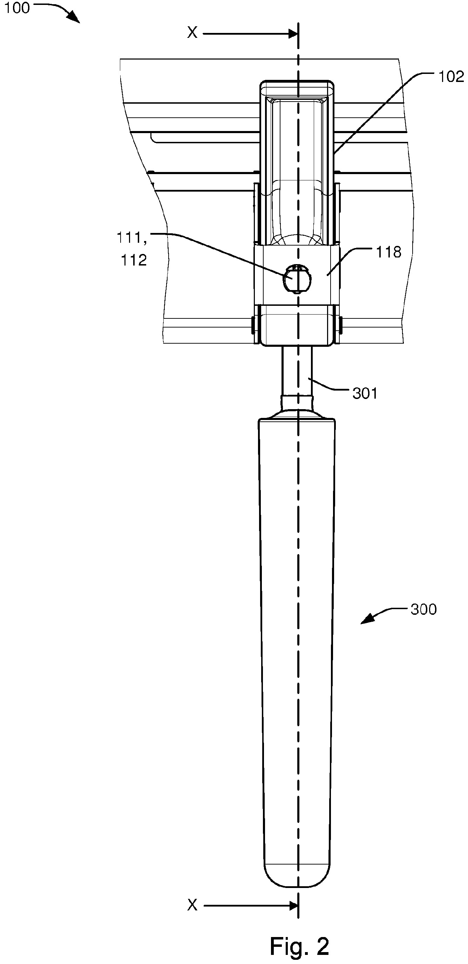

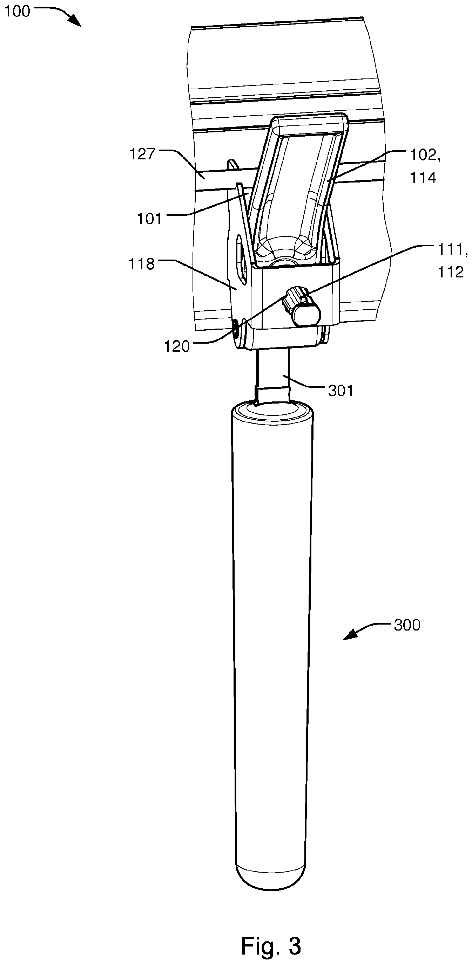

Fig. 1a is a schematic cross-sectional side view of a gripper 100 for a stick 301 on which an ice cream 300 has been formed. Fig. 1b is a further detailed cross-sectional side view of the gripper 100 and the stick 301 of the ice cream 300 when anchored in the gripper 100. The gripper 100 comprises a support 101. The stick 301 can be placed against the support 101 as illustrated in the examples of e.g. Figs. 1a-b. The gripper 100 comprise a lever 102 which is movable relative to the support 101 by a pivoting motion. The gripper 100 comprises a protrusion 103 103 which is attached to or is part of the lever 102. The protrusion 103 is used for retaining the stick 301 and is hereafter referred to as "retaining element 103". Figs. 1c-e show detailed cross-sectional side views of the gripper 100 and examples of the pivoting movement of the lever 102 thereof relative the support 101. The lever 102 is movable between a closed position (p₁) and an open position (p₂). In the closed position (p₁) the retaining element 103 and the support 101 pinch the stick 301, when the stick 301 is arranged in a gap 104 between the retaining element 103 and the support 101, as shown in Figs. 1a-c. The open position (p₂) is illustrated in the example of Fig. 1d. When the lever 102 is in the open position (p₂) the gap 104 is increased such that the stick 301 is released from the gap 104. Thus, in the closed position (p₁), the retaining element 103 exert a force onto the stick 301 so that the stick 301 is anchored in the gap 104 by the resulting frictional force created against the support 101 and the retaining element 103 which overcomes the weight of the ice cream 300 and allows for pulling in the stick. The width of the gap 104 is equal or less (generally less) than the width of the stick 301 in the closed position (p₁), whereas the width of the gap 104 is increased in the open position (p₂) to a width that is larger than the width of the stick 301. Fig. 1e is a further illustration showing the lever 102 in a further closed position when there is no stick 301 between the retaining element 103 and the support 101 to stop the lever 102. Fig. 2 is a front view of the gripper 100, which also illustrates the section (X) taken in Fig. 1a, and Fig. 3 is a perspective view of the gripper 100.

The lever 102 at least partly encloses the retaining element 103, as schematically shown in the cross-sectional side views of e.g. Figs. 1b-e. I.e. the material from which the lever 102 is formed surrounds at least part of the retaining element 103. The forces acting upon the retaining element 103 when being repeatedly pushed against the stick 301 in a production line may thus be dissipated to the lever 102 from the surface of the retaining element 103 which is surrounded by the lever 102. This provides for lowering the pressure on the material of the retaining element 103 and the lever 102 in the interface between the retaining element 103 and the lever 102. Having the retaining element 103 at least partly enclosed by the lever 102 provides for absorbing the aforementioned forces in a wider range of directions, as opposed to when e.g. soldering a retaining element at a single end thereof. The attachment point in the latter situation will be exposed to significant pressure and stress in the material due to the concentration of the forces to the single attachment point. Also, in the case of soldering a retaining element to a lever, the soldering process itself will have a risk of introducing mechanical stresses which can cause cracks in the material. Such cracks may develop further during use of the gripper and pieces of the material may be released to contaminate the ice cream. Having the retaining element 103 surrounded be the lever 102, e.g. along the sides of the retaining unit 103 shown in Fig. 1d, the forces may be absorbed by the lever 102 around the surrounded sides, to lower the pressure and stress in the material of the retaining element 103 and lever 102. The lever 102 does not fully surround the retaining unit 103; a small edge of the retaining unit 103 protrudes from the lever 102. Fig. 1d shown an example where the retaining element 103 is elongated and has a width that extends in a principal direction (A). In this example, the lever 102 encloses the retaining element 103 so that the area of the retaining element 103 being enclosed comprises surfaces facing the mentioned direction (A), and surfaces facing directions forming ±90 degrees to the indicated direction (A). Force absorption may thus occur in the mentioned directions to reduce the pressure. It is conceivable that the lever 102 may enclose other portions of the retaining element 103 to provide for the advantageous benefits as described above. The improved force absorption provides for reducing the risk of material fatigue and damage. This is particularly advantageous in food handling processes where mechanical failure otherwise can severely compromise the hygienic standards. Significant resources has to be spend to maintenance of the food manipulating devices, such as grippers for ice cream sticks, to make sure mechanical wear does not contaminate the ice cream. The gripper 100 thus provides for reducing the amount of maintenance, and thus also increasing the throughput of the production line.

The lever 102 may comprise a molded material. I.e. the lever 102 may be formed in a molding process. The retaining element 103 may be partly embedded in the molded material from which the lever 102 has been formed. Embedding the retaining element 103 into the lever 102 in the molding process thereof allows for having the lever 102 as least partly enclosing the retaining element 103 in a facilitated manner, e.g. with few manufacturing steps. This also provides for a strong fixation of the retaining element 103 to the lever 102, as the material from which the lever 102 is molded will conform the contour of the retaining element 103, thereby minimizing the risk of subsequent dislocation of the latter despite the repeated loads absorbed in the production line.

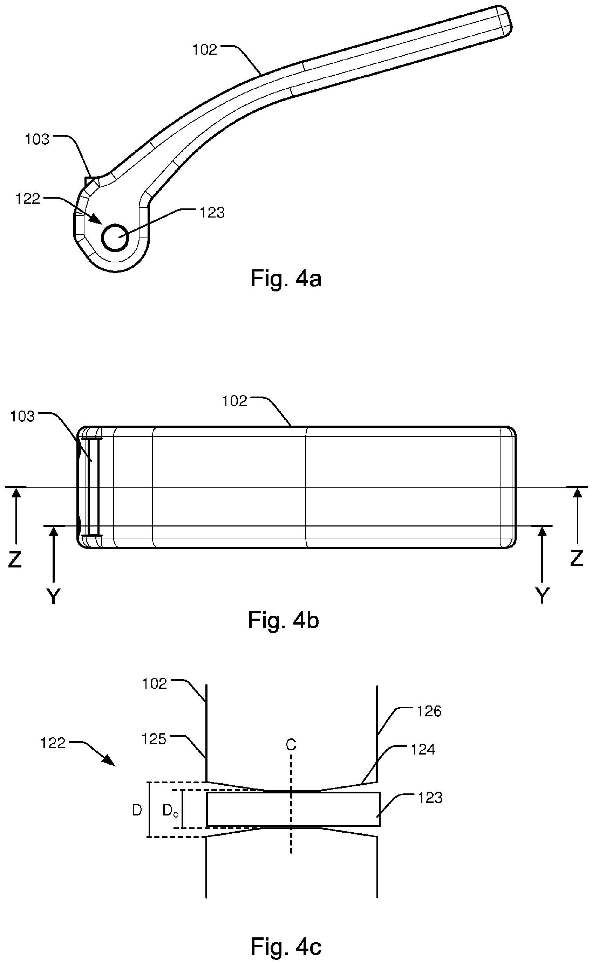

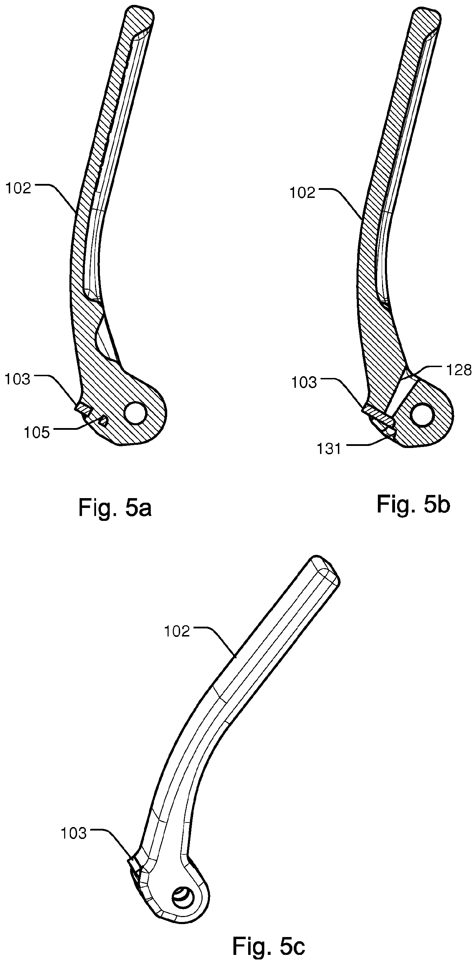

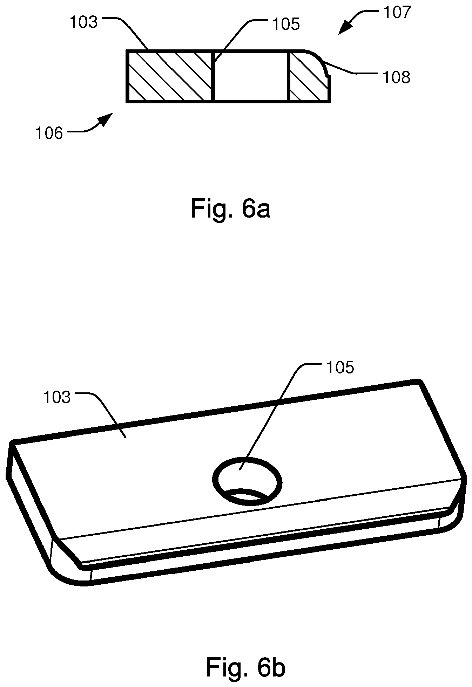

The retaining element 103 may comprise a recess 105 in which the molded material of the lever 102 is provided to interlock the retaining element 103 in the molded material. Fig. 6a is a detailed cross-sectional side view of the retaining element 103, and Fig. 6b is a perspective view thereof. The recess 105 is illustrated as a through hole in the examples shown, although it should be understood that the recess 105 may be provided in other forms, such as an indentation, depression or the like having various shapes, that may receive the molded material as illustrated in e.g. Fig. 5a or in the detailed view of Fig. 1e. The molded material, from which the lever 102 is formed, will thus after solidification interlock the retaining element 103, and efficiently anchor the latter in the lever 102. Figs. 5a-b are cross-sectional side views of the lever 102 through section lines Z and Y in Fig. 4b (a top view of the lever 102), respectively. The recess 105 of the retaining element 103, in the form of a through hole, is shown in Fig. 5a. Fig. 5b show an example where the retaining element 103 has been held in place by an elongated fixation tool (not shown) during the molding process, resulting in elongated channel 128 and an opposite recess 131 in the molded lever 102. Figs. 4a and 5c are a side view and a perspective view, respectively, of the exemplary lever 102.

The lever 102 may enclose the retaining element 103 except from an engagement edge 106, which is illustrated in e.g. Fig. 1c. The engagement edge 106 may deform the stick 301 when the retaining element 103 and the support 101 pinch the stick in the closed position p₁, to thereby secure the stick 301 in the gap 104, as further illustrated in Fig. 1c. The stick 301 may thus be efficiently anchored in the gap 104. Having the lever 102 enclosing the retaining element 103 except from the engagement edge 106 provides for maximizing the surface area of the retaining element 103 which is surrounded by the lever 102. This allows for lowering the pressure resulting from forces acting on the retaining element 103 even further. As elucidated above, this further minimizes the risk of high material stresses and formation of cracks in the material. It is conceivable that the lever 102 and the engagement edge 106 may exert a force onto the stick 301 which is sufficient to anchor the stick 301 in the gap 104 without deforming the stick 301, as deformation depends on the hardness of the stick. The engagement edge 106 may have a tapered shape for engaging the stick 301. The example shown in e.g. Figs. 1c and 6a show the engagement edge 106 as forming part of a corner of a rectangular-shaped retaining element 103.

As further shown in Fig. 6a, in conjunction with Fig. 1c, the retaining element 103 may be elongated and may extend between the engagement edge 106 and an opposite edge 107, which is enclosed in the lever 102. The opposite edge 106 may comprise a rounded shape 108. The rounded shape 108 of the opposite edge 107 provides for reducing mechanical stress in the materials when being subjected to repeated force loads during use of the gripper 100. The rounded shape 108 may allow for slight relative movement of the lever 102 and the retaining element 106 at the interface of the respective materials at the opposite edge 107 of the retaining element 106, which provides for improved force absorption and less strain in the lever 102.

Turning to Fig. 1d, the retaining element 103 may be elongated and may extend in a direction (A) with an acute angle (v₁) to the support 101. This provides for effectively anchoring the stick 301 in the gap 104. Having a retaining element 103 with a rectangular shape, such as illustrated in Fig. 1d, and being aligned with an acute angle (v₁) as illustrated allows for the positioning of a corner of the rectangular shape as a pointed engagement edge 106 against the stick, as shown in Fig. 1c. The retaining element 103 thus has an extension in direction (A) from a vertex 109 of the acute angle (v₁) towards a first end 110 of the lever 102 where the lever 102 is pivotally mounted.

The lever 102 may be formed from a material comprising a polymer, e.g. a polyamide. The entire lever 102 may be formed from a polymer, e.g. polyamide, in a molding process. The retaining element 103 may be formed from a material comprising a metal, such as stainless steel or some other metal or ceramic material that is hard and provides for anchoring the stick 301 in the gap 104. The entire retaining element 103 may be formed from a metal, such as stainless steel or other steel alloys, or from a ceramic material. Having a retaining element 103 formed from a metal or a ceramic material and being at least partly enclosed or embedded into a plastic lever 102 as described above provides for a robust gripper 100 with a long life time, requiring a minimum of maintenance.

The gripper 100 may comprise a bias element 111 being arranged against the lever 102 to exert a bias force F₁ on the lever 102, as schematically illustrated in Fig. 1b. The bias element 111 exert the bias force F₁ on the lever 102 to reduce the gap 104 and pinch the stick 301 when being arranged between the support 101 and the retaining element 103. The bias element 111 may thus push on the lever 102 so that the lever 102 pivots from the open position (p₂) to the closed position (p₁). Further, during use, the starting position of the lever 102 may be a closed position as illustrated in Fig. 1e when the stick 301 has not yet been inserted into the gap 104. The bias element 111 may thus exert a force F₁ on the lever 102 so that the position shown in Fig. 1e is attained, with the retaining element 103 positioned from the support 101 with a gap 104 less that the width of the stick 301. When the stick 301 is inserted, i.e. pushed up through the gap 104, then the stick 301 push with a counter force onto the retaining element 103, which overcomes the bias force F₁, so that the lever 102 moves to the position shown in Fig. 1c where the bias force F₁ continue to push against the stick 301 so that the stick 301 becomes anchored in the gap 104. An effective anchoring of the stick 301 in the gripper 100 may thus be attained.

The lever 102 may comprise a handle portion 114, as schematically illustrated in e.g. Fig. 1b. The lever 102 may be movable from the closed position (p₁) to the open position (p₂) to release the retaining element 103 from the stick 301 by, on the handle portion 114, applying a force F₂ that overcomes the bias force F₁, meaning that the force F₂ applied on the handle portion 114 then provides a torque around the pivot point of the lever 102 that is greater than a torque provided by the bias force F₁. By actuating the handle portion 114 the lever 102 thus moves to the open position (p₂) shown in Fig. 1d for conveniently releasing the stick 301 from the gap 104 in a facilitated manner. The handle portion 114 may be engaged by an actuator element (not shown) arranged to exert the force F₂ onto the handle portion 114. The handle portion 114 may extend with an angle v₂ to the support 101 as illustrated in Fig. 1b, which provides for facilitating the engagement with the handle portion 114 to release the ice cream stick 301. As illustrated in Fig. 1b the lever 102 may extend between a first end 110, at which the retaining unit 103 is at least partly enclosed, to a second end 116, at a tip 117 of the handle portion. The lever 102 may extend with a curved shape between the first end 110 and the second end 116.

The lever 102 may be pivotally mounted to an anchoring element 118, schematically illustrated in the side view of Fig. 1b and the perspective view of Fig. 3. The anchoring element 118 may comprise a stop member 127, also referred to as rubber stop 127, between the lever 102 and the support 101, as exemplified in Fig. 1b. The rubber stop 127 is arranged to limit movement of the lever 102 towards the support 101. For example, as the bias element 111 pushes against the lever 102, the rubber stop 127 will limit movement of the lever 102 so that a minimum gap 104 is attained, such as illustrated in Fig. 1e. In this case, the retaining element 103 may still be positioned at a distance from the support 101 to avoid wear of the engagement edge 106, but still having a gap 104 which is smaller than the width of the stick 301. Besides from avoiding wear of the retaining element 103, having a rubber stop 127 also provides for reducing the noise during operation due to damping of the movement of the lever 102 by the rubber stop 127.

The bias element 111 may comprise a spring biased pusher 112 engaged with a recess 113 in the lever 102, as schematically illustrated in Fig. 1b. This allows for a robust and controlled movement between the bias element 111 and the lever 102. The recess 113 provides for conveniently minimizing the risk of dislocating the bias element 111 relative the lever 102 during repeated use.

The spring biased pusher 112 may comprise a pusher element 112 and a spring 119 arranged around the pusher element 112. The pusher element 112 may extend through an aperture 120 of the anchoring element 118 to which the lever 102 is pivotally mounted, as further shown in the perspective view of Fig. 3. Turning again to Fig. 1b, the aperture 120 may be arranged opposite the recess 113 of the lever 102. The pusher element 112 may comprise a flange 121 positioned between the aperture 120 and the recess 113 of the lever 102. The spring 119 may be confined to extend between the flange 121 and the aperture 120 of the anchoring element 118 to push the pusher element 112 against the recess 113. Having the spring 119 arranged around the pusher element 112, between the flange 121 and the opposite aperture 120 in the anchoring element 118 allows an effective confinement of the spring 119 which minimizes the risk of having parts of the spring 119 released from the gripper 100 in case the spring 119 would break.

It should be understood that although the bias element 111 has been shown as a spring bias pusher 112 in the example of Fig. 1b, it is conceivable that the bias element 111 may comprise other elements capable of exerting a force F₁ onto the lever 102, such as resiliently deformable elements of e.g. a rubber material. It is also conceivable that such resilient element, being a spring 119 or a rubber material, may be arranged in various positions relative to the lever 102 to exert a bias force on the lever to close the gap 104. E.g. such bias element 111 may be arranged between the lever 102 and the support 101 to pull the lever 102 towards the support 101.

The lever 102 may be movable around a pivot joint 122, as shown in the example of e.g. Fig. 1b, and in more detail in Fig. 4c. The pivot joint 122 may comprise a pin 123, see Figs. 4a and 4c, extending through an aperture 124 in the lever 102. The aperture 124 may extend between first and second sidewalls 125, 126, of the lever 102. Further, the aperture has a diameter (D_{c}) at a center position (C) between the first and second sidewalls 125, 126. D_{c} may be smaller than a diameter (D) of the aperture 124 between the first sidewall 125 and the center position (C), and D_{c} may also be smaller than a diameter (D) of the aperture 124 between the second sidewall 126 and the center position (C). Thus, the aperture 124 may have a narrow portion at the center position (C) with a reduced diameter (D_{c}), and larger diameters (D) towards the first and second sidewalls 125, 126, as schematically illustrated in Fig. 4c. The surface surrounding the aperture 124 may accordingly have a convex shape towards the pin 123. The lever 102 may thus be allowed to tilt to the left and right in Fig. 4c, since the diameter of the pin 123 corresponds substantially to the diameter (D_{c}) at the center position (C), but has a smaller diameter than the aperture 124 towards the first and second sidewalls 125, 126, which can accommodate such tilting movement. Hence, besides for pivoting around the pin 123, the lever 102 may accommodate temporary asymmetrical loads, e.g. in case a force F₂ is applied on an off-center part of the handle portion 114, and still pivot as desired around pivot joint 122 with a self-centering effect.

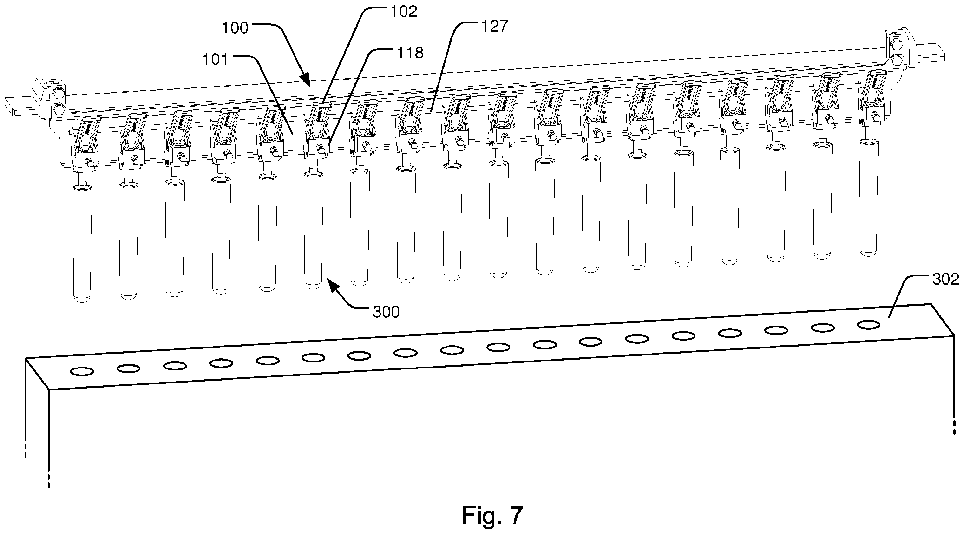

As mentioned, the lever 102 may be pivotally mounted to an anchoring element 118. The support 101 may extend in a vertical direction, as illustrated in e.g. Fig. 1b. The bias element 111 may extend horizontally through an aperture 120 of the anchoring element 118 to engage the lever 102. The lever 102 may be pivotally mounted between the aperture 120 and the support 101. Further, the anchoring element 118 may be removably attached to the support 101. Having the anchoring element 118 removably attached to the support 101 provides for facilitated mounting and replacement of the lever 102 if necessary. Several grippers 100 may be provided in a linear assembly such as seen in Fig. 7, where each gripper 100 extract an ice cream from a mold 302. The anchoring elements 118, to which the levers 102 are pivotally mounted, may thus be removably attached to the support 101, which may extend along the length of such linear assembly. Each anchoring element 118 may comprise protrusions 129, such as hook-shaped elements 129, which are anchored into corresponding openings of the support 101. Fig. 1b shows an example of such protrusion 129 of the anchoring element 118 which extends through the support 101. The anchoring element 118 may be further secured to the support 101 by a releasable pin 130 that is inserted into a part 1291 of the anchoring element 118 that extends through the support 101, as exemplified in Fig. 1b. This provides for a fixation of the anchoring element 118 and the lever 102 in the correct position to the support 101.

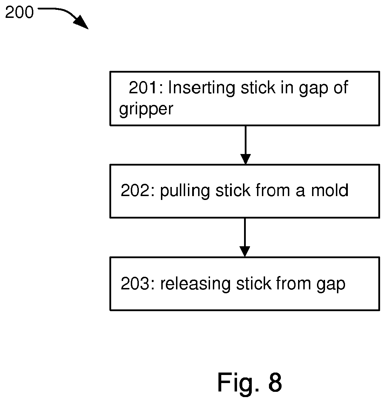

Fig. 8 illustrates a flow chart of a method 200 of gripping an ice cream stick 301 by using a gripper 100 as described above in relation to Figs. 1a - 7. The method 200 comprises inserting 201 the stick 301 in the gap 104 between the support 101 and the retaining element 103 of the movable lever 102 of the gripper 100. The method comprises pulling 202 the ice cream stick 301 and hence the ice cream from a mold 302 while being secured in the gap 104. The method comprises releasing 203 the ice cream stick 301 from the gap 104 by moving the lever 102 relative to the support 101, as described above in relation to Figs. 1a-e. The advantageous benefits as described above for the gripper 100 are thus realized while performing method 200, i.e. to extract ice cream from a mold with a minimized risk of contaminating the ice cream while reducing the maintenance needs of the gripper 100.

From the description above follows that, although various embodiments of the invention have been described and shown, the invention is not restricted thereto, but may also be embodied in other ways within the scope of the subject-matter defined in the following claims.

## Claims

1. A gripper (100) for a stick (301) on which ice cream (300) is formed, comprising:
a support (101), and
a lever (102) being movable relative to the support (101) by a pivoting motion,
the lever (102) comprising a protrusion (103),
wherein the lever (102) is movable between
- a closed position (p₁) in which the protrusion (103) and the support (101) pinch the stick (301), when the stick (301) is arranged in a gap (104) between the protrusion (103) and the support (101), and
- an open position (p₂) in which the gap (104) is increased such that the stick (301) is released from the gap (104), **characterized in that** the lever (102) comprises a molded material that at least partly encloses the protrusion (103), wherein the lever (102) is formed from a material comprising a polymer, and the protrusion (103) is formed from a material comprising a metal or a ceramic material.

2. A gripper according to claim 1, wherein the protrusion (103) comprises a recess (105) in which the molded material is provided to interlock the protrusion (103) in the molded material.

3. A gripper according to claim 1 or 2, wherein the lever (102) encloses the protrusion (103) except from an engagement edge (106), the engagement edge (106) deforming the stick (301) when the protrusion (103) and the support (101) pinch the stick in the closed position (p₁), to thereby secure the stick (301) in the gap (104).

4. A gripper according to claim 3, wherein the protrusion (103) is elongated and extends between the engagement edge (106) and an opposite edge (107) enclosed in the lever (102), and the opposite edge (107) comprises a rounded shape (108).

5. A gripper according to any of claims 1 - 4, wherein the protrusion (103) is elongated and extends in a direction (A) with an acute angle (v1) to the support (101), and the protrusion (103) extends in direction (A) from a vertex (109) of the acute angle towards a first end (110) of the lever (102) where the lever (102) is pivotally mounted.

6. A gripper according to any of claims 1 - 5, comprising a bias element (111) being arranged against the lever (102) to exert a bias force (F₁) on the lever (102) to reduce the gap (104) and pinch the stick (301).

7. A gripper according to claim 6, wherein the lever (102) comprises a handle portion (114), and the lever (102) is movable from the closed position (p₁) to the open position (p₂), to release the protrusion (103) from the stick (301) by, on the handle portion (114), applying a force (F₂) that overcomes the bias force (F₁).

8. A gripper according to claim 6 or 7, wherein the lever (102) is pivotally mounted to an anchoring element (118), the anchoring element (118) comprises a stop member (127) between the lever (102) and the support (101), the stop member (127) limiting movement of the lever (102) towards the support (101).

9. A gripper according to any of claims 6 - 8, wherein the bias element (111) comprises a spring biased pusher (112) engaged with a recess (113) in the lever (102).

10. A gripper according to claim 9, wherein
the spring biased pusher (112) comprises a pusher element (112) and a spring (119) arranged around the pusher element (112),
the pusher element (112) extends through an aperture (120) of an anchoring element (118) to which the lever (102) is pivotally mounted, the aperture (120) being arranged opposite the recess (113) of the lever (102),
the pusher element (112) comprises a flange (121) positioned between the aperture (120) and the recess (113) of the lever (102), and
the spring (119) is confined to extend between the flange (121) and the aperture (120) of the anchoring element (118) to push the pusher element (112) against the recess (113).

11. A gripper according to any of claims 1 - 10, wherein the lever (102) is
movable around a pivot joint (122) comprising a pin (123) extending through an aperture (124) in the lever (102), the aperture (124) extending between first and second sidewalls (125, 126) of the lever (102), the aperture has a diameter (Dc) at a center position (C) between the first and second sidewalls (125, 126) that is smaller than;
a diameter (D) of the aperture (124) between the first sidewall (125) and the center position (C), and
a diameter (D) of the aperture (124) between the second sidewall (126) and the center position (C).

12. A gripper according to any of claims 6 - 10, wherein the lever (102) is pivotally mounted to an anchoring element (118),
the support (101) extends in a vertical direction,
the bias element (111) extends horizontally through an aperture (120) of the anchoring element (118) to engage the lever (102),
the lever (102) is pivotally mounted between the aperture (120) and the support (101), and
the anchoring element (118) is removably attached to the support (101).

13. A method (200) of gripping an ice cream stick (301) by using a gripper (100) according to any of claims 1 - 12, comprising
inserting (201) the stick (301) in a gap (104) between a support (101) and a protrusion (103) of a movable lever (102) of the gripper (100),
pulling (202), when the lever (102) is in a closed position (p₁), the ice cream stick (301) and hence the ice cream from a mold (302) while being secured in the gap (104),
releasing (203) the ice cream stick (301) from the gap (104) by moving the lever (102) to an open position (p₂).

## Patentansprüche

1. Greifer (100) für einen Stiel (301), auf dem Speiseeis (300) ausgebildet ist, Folgendes umfassend:
eine Stütze (101) und
einen Hebel (102), der in Bezug zur Stütze (101) in einer Schwenkbewegung beweglich ist, wobei der Hebel (102) einen Vorsprung (103) umfasst,
wobei der Hebel (102) zwischen folgenden Stellungen beweglich ist:
- einer geschlossenen Stellung (p₁), in der der Vorsprung (103) und die Stütze (101) den Stiel (301) einklemmen, wenn der Stiel (301) in einem Spalt (104) zwischen dem Vorsprung (103) und der Stütze (101) angeordnet ist, und
- einer geöffneten Stellung (p₂), in der der Spalt (104) derart vergrößert wird, dass der Stiel (301) aus dem Spalt (104) freigegeben wird, **dadurch gekennzeichnet, dass**
der Hebel (102) ein geformtes Material umfasst, das den Vorsprung (103) zumindest teilweise umschließt, wobei der Hebel (102) aus einem Material ausgebildet ist, das ein Polymer umfasst, und der Vorsprung (103) aus einem Material ausgebildet ist, das ein metallisches oder keramisches Material umfasst.

2. Greifer nach Anspruch 1, wobei der Vorsprung (103) eine Aussparung (105) umfasst, in der das geformte Material vorgesehen ist, um den Vorsprung (103) in dem geformten Material zu verzahnen.

3. Greifer nach Anspruch 1 oder 2, wobei der Hebel (102) den Vorsprung (103) bis auf eine Eingriffskante (106) umschließt, wobei die Eingriffskante (106) den Stiel (301) verformt, wenn der Vorsprung (103) und die Stütze (101) den Stiel in der geschlossenen Stellung (p₁) einklemmen, um dadurch den Stiel (301) im Spalt (104) zu fixieren.

4. Greifer nach Anspruch 3, wobei der Vorsprung (103) länglich ist und sich zwischen der Eingriffskante (106) und einer im Hebel (102) umschlossenen entgegengesetzten Kante (107) erstreckt und wobei die entgegengesetzte Kante (107) eine abgerundete Form (108) umfasst.

5. Greifer nach einem der Ansprüche 1-4, wobei der Vorsprung (103) länglich ist und sich in eine Richtung (A) mit einem spitzen Winkel (v1) zur Stütze (101) erstreckt und sich der Vorsprung (103) in eine Richtung (A) von einem Scheitelpunkt (109) des spitzen Winkels zu einem ersten Ende (110) des Hebels (102), an dem der Hebel (102) verschwenkbar montiert ist, erstreckt.

6. Greifer nach einem der Ansprüche 1-5, ein Vorspannungselement (111) umfassend, das gegen den Hebel (102) angeordnet ist, um eine Vorspannungskraft (F₁) auf den Hebel (102) aufzubringen, um den Spalt (104) zu verringern und den Stiel (301) einzuklemmen.

7. Greifer nach Anspruch 6, wobei der Hebel (102) einen Griffabschnitt (114) umfasst und der Hebel (102) von der geschlossenen Stellung (p₁) zur geöffneten Stellung (p₂) beweglich ist, um den Vorsprung (103) vom Stiel (301) freizugeben, indem eine Kraft (F₂) auf den Griffabschnitt (114) aufgebracht wird, die die Vorspannungskraft (F₁) überwindet.

8. Greifer nach Anspruch 6 oder 7, wobei der Hebel (102) verschwenkbar an einem Verankerungselement (118) montiert ist, wobei das Verankerungselement (118) ein Anschlagelement (127) zwischen dem Hebel (102) und der Stütze (101) umfasst, wobei das Anschlagelement (127) die Bewegung des Hebels (102) zur Stütze (101) einschränkt.

9. Greifer nach einem der Ansprüche 6-8, wobei das Vorspannungselement (111) einen federvorgespannten Schieber (112) umfasst, der in eine Aussparung (113) im Hebel (102) eingreift.

10. Greifer nach Anspruch 9, wobei
der federvorgespannte Schieber (112) ein Schieberelement (112) und eine um das Schieberelement (112) herum angeordnete Feder (119) umfasst,
sich das Schieberelement (112) durch eine Öffnung (120) eines Verankerungselements (118) erstreckt, an dem der Hebel (102) verschwenkbar montiert ist, wobei die Öffnung (120) der Aussparung (113) des Hebels (102) entgegengesetzt angeordnet ist,
das Schieberelement (112) einen Flansch (121) umfasst, der zwischen der Öffnung (120) und der Aussparung (113) des Hebels (102) angeordnet ist, und
die Feder (119) darauf beschränkt ist, sich zwischen dem Flansch (121) und der Öffnung (120) des Verankerungselements (118) zu erstrecken, um das Schieberelement (112) gegen die Aussparung (113) zu schieben.

11. Greifer nach einem der Ansprüche 1-10, wobei der Hebel (102) um ein Drehgelenk (122) beweglich ist, das einen Stift (123) umfasst, der sich durch eine Öffnung (124) im Hebel (102) erstreckt, wobei sich die Öffnung (124) zwischen einer ersten und zweiten Seitenwand (125, 126) des Hebels (102) erstreckt, wobei die Öffnung einen Durchmesser (D_{c}) an der Mittelstellung (C) zwischen der ersten und zweiten Seitenwand (125, 126) aufweist, der kleiner ist als:
ein Durchmesser (D) der Öffnung (124) zwischen der ersten Seitenwand (125) und der Mittelstellung (C) und
ein Durchmesser (D) der Öffnung (124) zwischen der zweiten Seitenwand (126) und der Mittelstellung (C).

12. Greifer nach einem der Ansprüche 6-10, wobei der Hebel (102) verschwenkbar an einem Verankerungselement (118) montiert ist,
wobei sich die Stütze (101) in vertikaler Richtung erstreckt,
wobei sich das Vorspannungselement (111) horizontal durch eine Öffnung (120) des Verankerungselements (118) erstreckt, um in den Hebel (102) einzugreifen,
wobei der Hebel (102) verschwenkbar zwischen der Öffnung (120) und der Stütze (101) montiert ist und
wobei das Verankerungselement (118) lösbar an der Stütze (101) befestigt ist.

13. Verfahren (200) zum Greifen eines Speiseeisstiels (301) unter Verwendung eines Greifers (100) nach einem der Ansprüche 1-12, Folgendes umfassend:
Einsetzen (201) des Stiels (301) in einen Spalt (104) zwischen einer Stütze (101) und einem Vorsprung (103) eines beweglichen Hebels (102) des Greifers (100),
wenn sich der Hebel (102) in der geschlossenen Stellung (p₁) befindet, Ziehen (202) am Speiseeisstiel (301) und somit Ziehen des Speiseeises aus einer Form (302), während der Stiel in dem Spalt (104) fixiert ist,
Freigeben (203) des Speiseeisstiels (301) aus dem Spalt (104) durch Bewegen des Hebels (102) in eine geöffnete Stellung (P₂) .

## Revendications

1. Pince (100) pour un bâton (301) sur lequel est formée une crème glacée (300), comprenant :
un support (101), et
un levier (102) mobile par rapport au support (101) par un mouvement pivotant, le levier (102) comprenant une saillie (103),
dans laquelle le levier (102) est mobile entre une position fermée (p₁) dans laquelle la saillie (103) et le support (101) pincent le bâton (301), lorsque le bâton (301) est disposé dans un espacement (104) entre la saillie (103) et le support (101), et
une position ouverte (p₂) dans laquelle l'espacement (104) est augmenté de façon que le bâton (301) soit libéré de l'espacement (104), **caractérisée en ce que**
le levier (102) comprend un matériau moulé qui enferme au moins en partie la saillie (103), dans laquelle le levier (102) est formé à partir d'un matériau comprenant un polymère, et la saillie (103) est formée à partir d'un matériau comprenant un métal ou d'un matériau céramique.

2. Pince selon la revendication 1, dans laquelle la saillie (103) comprend un évidement (105) dans lequel le matériau moulé est placé pour verrouiller la saillie (103) dans le matériau moulé.

3. Pince selon la revendication 1 ou 2, dans laquelle le levier (102) enferme la saillie (103) à l'exception d'un bord de prise (106), le bord de prise (106) déformant le bâton (301) lorsque la saillie (103) et le support (101) pincent le bâton dans la position fermée (p₁), afin d'ainsi fixer le bâton (301) dans l'espacement (104).

4. Pince selon la revendication 3, dans laquelle la saillie (103) est allongée et s'étend entre le bord de prise (106) et un bord opposé (107) enfermé dans le levier (102), et le bord opposé (107) comprend une forme arrondie (108).

5. Pince selon l'une quelconque des revendications 1 à 4, dans laquelle la saillie (103) est allongée et s'étend dans une direction (A) selon un angle aigu (v1) par rapport au support (101), et la saillie (103) s'étend dans la direction (A) à partir d'un sommet (109) de l'angle aigu vers une première extrémité (110) du levier (102) où le levier (102) est monté pivotant.

6. Pince selon l'une quelconque des revendications 1 à 5, comprenant un élément de sollicitation (111) disposé contre le levier (102) pour exercer une force de sollicitation (F₁) sur le levier (102) pour réduire l'espacement (104) et pincer le bâton (301).

7. Pince selon la revendication 6, dans laquelle le levier (102) comprend une partie poignée (114), et le levier (102) est mobile de la position fermée (p₁) à la position ouverte (p₂) pour libérer la saillie (103) du bâton (301), par l'application d'une force (F₂) sur la partie poignée (114) qui dépasse la force de sollicitation (F₁).

8. Pince selon la revendication 6 ou 7, dans laquelle le levier (102) est monté pivotant sur un élément d'ancrage (118), l'élément d'ancrage (118) comprend un organe d'arrêt (127) entre le levier (102) et le support (101), l'organe d'arrêt (127) limitant le déplacement du levier (102) vers le support (101).

9. Pince selon l'une quelconque des revendications 6 à 8, dans laquelle l'élément de sollicitation (111) comprend un poussoir à ressort (112) en prise avec un évidement (113) dans le levier (102).

10. Pince selon la revendication 9, dans laquelle
le poussoir à ressort (112) comprend un organe pousseur (112) et un ressort (119) disposé autour de l'organe pousseur (112),
l'organe pousseur (112) s'étend à travers une ouverture (120) d'un élément d'ancrage (118) sur lequel le levier (102) est monté pivotant, l'ouverture (120) étant disposée à l'opposé de l'évidement (113) du levier (102),
l'organe pousseur (112) comprend un rebord (121) positionné entre l'ouverture (120) et l'évidement (113) du levier (102), et
le ressort (119) est confiné pour s'étendre entre le rebord (121) et l'ouverture (120) de l'élément d'ancrage (118) pour pousser l'organe pousseur (112) contre l'évidement (113).

11. Pince selon l'une quelconque des revendications 1 à 10, dans laquelle le levier (102) est mobile autour d'un joint pivot (122) comprenant une broche (123) s'étendant à travers une ouverture (124) dans le levier (102), l'ouverture (124) s'étendant entre des première et seconde parois latérales (125, 126) du levier (102), l'ouverture présente un diamètre (Dc) à une position centrale (C) entre les première et seconde parois latérales (125, 126) qui est inférieur à :
un diamètre (D) de l'ouverture (124) entre la première paroi latérale (125) et la position centrale (C), et
un diamètre (D) de l'ouverture (124) entre la seconde paroi latérale (126) et la position centrale (C).

12. Pince selon l'une quelconque des revendications 6 à 10, dans laquelle le levier (102) est monté pivotant sur un élément d'ancrage (118),
le support (101) s'étend dans une direction verticale,
l'élément de sollicitation (111) s'étend horizontalement à travers une ouverture (120) de l'élément d'ancrage (118) pour venir en prise avec le levier (102),
le levier (102) est monté pivotant entre l'ouverture (120) et le support (101), et
l'élément d'ancrage (118) est fixé amovible sur le support (101).

13. Procédé (200) de saisie d'un bâton de crème glacée (301) au moyen d'une pince (100) selon l'une quelconque des revendications 1 à 12, comprenant
l'insertion (201) du bâton (301) dans un espacement (104) entre un support (101) et une saillie (103) d'un levier mobile (102) de la pince (100),
le tirage (202), lorsque le levier (102) est dans une position fermée (p₁), du bâton de crème glacée (301) et donc de la crème glacée depuis un moule (302) tout en étant fixé dans l'espacement (104),
la libération (203) du bâton de crème glacée (301) de l'espacement (104) par déplacement du levier (102) dans une position ouverte (p₂).
